# EUROPEAN PATENT SPECIFICATION

(11) **EP 4 216 868 B1**
(45) Date of publication and mention of the grant of the patent: **06.08.2025**
(21) Application number: 21765724.6
(22) Date of filing: 02.09.2021
(51) Int. Cl.: A61C 5/55, A61C 5/62, A61C 9/00

(54) **HEATING DEVICE FOR HEATING DENTAL MATERIAL, SYSTEM FOR APPLYING DENTAL MATERIAL AND METHOD FOR CONTROLLING THE TEMPERATURE OF A DENTAL MATERIAL**
ERWÄRMUNGSVORRICHTUNG ZUM ERWÄRMEN VON ZAHNMATERIAL, SYSTEM ZUM AUFTRAGEN VON ZAHNMATERIAL UND VERFAHREN ZUR STEUERUNG DER TEMPERATUR EINES ZAHNMATERIALS
DISPOSITIF DE CHAUFFAGE POUR CHAUFFER UN MATÉRIAU DENTAIRE, SYSTÈME D'APPLICATION DE MATÉRIAU DENTAIRE ET PROCÉDÉ DE CONTRÔLE DE LA TEMPÉRATURE D'UN MATÉRIAU DENTAIRE

(30) Priority: 25.09.2020 EP 20198303
(43) Date of publication of application: 02.08.2023
(73) Proprietor: Solventum Intellectual Properties Company, Maplewood, MN 55144 (US)
(72) Inventor: RICHTER, Christian A., 82340 Feldafing (DE); GERLACH, Korbinian, 82229 Seefeld (DE); KELZ, Ralf M., 82229 Seefeld (DE); SCHMID, Rudolf, 82223 Eichenau (DE); WELKER, Stefan K., 82229 Seefeld (DE)
(74) Representative: Brem, Roland
(86) International application number: PCT/IB2021/058044
(87) International publication number: WO 2022/064300

(56) References cited:
- EP-A1- 1 464 904
- EP-A2- 1 479 356
- WO-A1-2021/053408
- JP-A- H04 170 947
- US-A1- 2015 030 992
- US-A1- 2020 121 419

## Description

Various types of materials are used for dental treatments for restorative purposes. For instance, dental composite materials can be used for filling cavities in a patient's tooth. Moreover, dental materials can be used to repair crown fractures, tooth wear, and congenital defects.

In some cases, it can be expedient to warm up the dental materials for particular purposes, for instance in order to alter the properties of the dental materials prior to applying them to the patient's teeth.

In particular, highly filled composite materials can be warmed up in order to increase the viscosity of the composite materials. Increasing the viscosity of the composite materials enhances the handling and/or performance characteristics of the composite materials which facilitates the application of the composite materials to the patient's teeth.

Some composite materials, however, become less viscous as they are heated. This can also be advantageous in some cases, for instance to allow the composite material to flow and adapt to the intricacies of a dental cavity and to allow for easier extrusion of the material from its container.

The dental materials are often provided in a package, such as a capsule or other container, which allows for storing an amount of the dental material. Typically, heating devices based on an electric resistor are used to heat the dental materials by placing the container housing the dental material into or onto the heating device.

US 2004/234921 A1 (Addent) relates to a heating device into which a compule of dental material can be inserted to elevate the temperature of the dental material to above ambient temperature prior to clinical use having a base for housing a heating element, a temperature control mechanism for controlling the temperature of the heating element, a power connection for electrically connecting the temperature control mechanism to a source of power and a heating receptacle removably mounted on the base.

Devices for melting high melting materials used by dental technicians or for analytical purposes are described in EP 1 464 904 A1 (Barget). These melting devices allow the melting of materials up to a temperature of 1,600°C and comprise a quartz glass melting crucible surrounded by an insulating block with at least one radiation shaft leading toward the melting crucible and containing a short-wave quartz infrared radiator as a radiant heat source.

DE 10 2018 118577 A1 (Voco) describes the reception of a dental material in a device and the application of the dental material from such a device as well as a method for treating dental material.

WO 2021/053408 (3M) describes a device for heating a dental material. The device has a body and a socket which is removably received within the body.

However, the existing approaches provide certain disadvantages. Thus, there is still a need for a heating device which can be used conveniently and which is energy efficient.

Moreover, when heating the dental material a certain target temperature range of the heated dental material is desired. For instance, when heating the dental material to a temperature below the desired target temperature range the desired dental material properties may not be achieved or may only partially be achieved.

Moreover, overheating the dental material to a temperature above the desired temperature range and/or for an extended period of time can compromise and/or deteriorate the dental material and/or the container housing the dental material.

Furthermore, heating the dental material to a temperature higher than required and/or desired causes a waste of the energy consumed for the heating.

Therefore, it is an object of the invention to provide a heating device for heating a dental material with improved heating efficiency.

This object is achieved by a heating device for heating a dental material as set out in the appended set of claims. The heating device comprises a body having an opening formed therein configured to at least partially receive a container housing the dental material to be heated.

Dental materials to be heated include in particular dental composite material, which are used for dental restorations (e.g. materials for filling cavities, repair materials).

The body of the heating device can include a housing configured to house the components of the heating device, such as electronics, batteries, control elements, etc. The housing can be of a one-piece construction or a multi-piece construction, such as a two-piece construction for instance, to facilitate assembly of the heating device.

The opening formed in the body can be open to the environment surrounding the heating device. However, the opening can also be at least selectively and/or at least partially closed to the environment, for instance by means of a lid or other closing structure in order to prevent or at least minimize contamination within the opening from the environment when the heating device is not in use. The opening can extend into the body by a certain distance, such as by a length of 25 cm, 20 cm, 15 cm or 10 cm.

The opening can be configured to receive different types of containers, such as capsules and/or syringes. Thus, the shape and/or geometry of the opening formed in the body can in particular be configured to accommodate the container housing the dental material to be at least partially received in the opening. Thus, for instance, the length of the opening can be configured according to the length of the container to be at least partially received therein.

The body can also include an internal threading arranged at or in the opening and configured to engage with an external threading, provided for instance on an external applicator carrying the container and/or on the container itself in order to fixate the container in the opening.

Additionally or alternatively, the body can include at least one locking element configured to lock the container and/or the applicator in position when the container is received in the opening. For instance, the body can include a slot configured to receive a protrusion arranged on the container and/or on the applicator. Alternatively or additionally, the body can include a detent configured to cooperate with a slot or groove arranged on the container and/or the applicator. However, the detent can also be arranged on the container and/or on the applicator and the slot or groove can be arranged on the body, for instance in the opening.

Thus, providing said locking element can prevent unwanted removal of the container from the opening. For instance, the heating device can be configured to prevent removal of the container from the opening until a pre-determined temperature and/or a predetermined heating time of the dental material is achieved. Once the predetermined temperature and/or the predetermined heating time of the dental material is achieved, the heating device can actuate the locking element, for instance by means of an actuator and a controller, in order to allow the container to be withdrawn from the opening by the user.

The heating device can also comprise a detection means configured to detect the presence of the container in the opening of the body, for instance in the form of a contact switch or non-contact switch, such as a proximity sensor, a photoelectric barrier or a temperature sensor. The detection means can also be configured to communicate with a controller configured to control the heating device. Thus, when the container is removed from the opening of the heating device, the heating device can detect the removal of the container and can be deactivated or switched to a standby mode in which the heating elements are deactivated by means of the detection means and the controller. Thus, the safety of the heating device can be enhanced by preventing unwanted heating by the heating device.

The heating device can also comprise a detection means, which can be the same detection means as described above or a different detection means, configured to deactivate the heating device or switch the heating device to a standby mode in which the heating elements are deactivated after the detection means has detected that the container has been in the opening for a predetermined time. Thus, the safety of the heating device is enhanced by preventing prolonged and unwanted heating by the heating device. Furthermore, deterioration and/or compromising of the dental material and/or the container can be prevented.

Similarly the detection means mentioned above can be used for switching on the device once the container has been inserted in the opening of the body. Using a detection means for switching on or switching off the device can facilitate the operation of the device during use as no further button needs to be pressed.

The body can also comprise a plurality of openings formed therein, each configured to at least partially receive a container housing the dental material to be heated. At least two of the openings can each have different geometries and/or shapes, for instance in order to accommodate different containers of different sizes and/or different shapes and/or housing different dental materials with respect to their composition and/or physical properties.

For instance, one opening can be configured to receive a syringe housing the dental material and a second opening can be configured to receive a capsule housing the dental material. The at least two different containers can be configured to house different dental materials, preferably having different properties and/or different target temperatures. For instance, one dental material housed in a first container might have to be heated to a first temperature and a second dental material in a second container might have to be heated to a second temperature which is different from the first temperature.

The dental material to be heated can be any dental material used to restore a patient's teeth, in particular for filling cavities and for repairing crown fractures, tooth wear and congenital defects. The dental material is a curable material since the dental material is often cured, for instance by applying light to the dental material after the material has been applied to the patient's teeth. **In** particular, the dental material can include resin-based composite materials comprising a matrix and at least one filler, such as filler glasses and glass ceramics. Furthermore, the dental materials can also include glass ionomer cement (GIC), for instance.

The heating device also comprises at least one light emitting diode configured to emit infrared light onto an outer surface of the container housing the dental material once received in the opening.

The light emitting diode can be configured to emit light having a wavelength in the range of 800 to 1500 nm. Preferably, the light emitting diode can be configured to emit light having a wavelength of substantially 950 nm. The light emitting diode can preferably be arranged within the body of the heating device, preferably within close proximity of an outer surface, such as an outer wall, of the container once said container is at least partially received in the opening. Preferably, the light emitting diode can be positioned to be within 5 cm, preferably within 4 cm, more preferably within 3 cm, more preferably within 2 cm, most preferably within 1 cm of the outer surface of the container once said container is at least partially received in the opening.

The heating device can also include proximity sensors configured to detect the proximity of the outer surface of the container once said container is at least partially received in the opening. Thus, the proximity sensor can be configured to communicate with a controller and an actuator configured to displace the light emitting diode. Thus, the proximity sensor can ensure that the light emitting diode is not damaged by the container when placing the container into the opening. Also, the proximity sensor and the actuator can ensure a close proximity of the light emitting diode to the outer surface of the container in order to increase the efficiency of the heating of the dental material. Different containers, preferably having different shapes and/or different sizes, can thereby be placed into the opening while maintaining a close proximity of the light emitting diode to the outer surface of the container.

Preferably, the heating device can comprise a plurality of light emitting diodes, wherein the plurality of light emitting diodes are preferably distributed around the circumference of the container and/or along a longitudinal axis of the container once the container is at least partially received in the opening.

The heating device further comprises at least one temperature sensor configured to determine a temperature of the outer surface of the container once received in the opening of the body.

The temperature sensor is either a contactless temperature sensor which does not have to contact the outer surface of the container in order to determine temperature of the outer surface of the container, such as an infrared temperature sensor, for instance a pyroelectric sensor or a thermopile detector or a bolometer focal plane array (FPA), configured to detect infrared energy emitted by the container housing the dental material once received in the opening of the body.

Or the temperature sensor is a contact temperature sensor configured to contact the outer surface of the container in order to determine the temperature of the outer surface of the container, such as a thermocouple or a resistance thermometer, such as a PT100. In this case, the heating device can also comprise a displacing means for displacing the temperature sensor towards or away from the container once the container is at least partially received in the opening to ensure the temperature sensor sufficiently contacts the outer surface of the container.

In both cases described above, the heating device can also comprise a proximity sensor to detect the distance between the temperature sensor and the outer surface of the container once the container is at least partially received in the opening.

Moreover, the heating device can comprise a plurality of temperature sensors. At least two temperature sensors can each be of different types, wherein for instance a first temperature sensor is a contactless temperature sensor, such as an infrared temperature sensor, and a second temperature sensor is a contact temperature sensor, such as a thermocouple or a resistance thermometer.

By determining the temperature of the outer surface of the container by means of the temperature sensors or the plurality of temperature sensors an underheating and/or an overheating of the dental material can be determined and be prevented, for instance by deactivating the heating process of the heating device once a predetermined temperature measured by the temperature sensor has been reached. Thus, a deterioration and/or a compromising of the dental material and/or of the container housing the dental material can be prevented or at least reduced.

The heating device also comprises a controller having a control circuitry configured to communicate with the temperature sensor and the at least one light emitting diode and to control the temperature of the outer surface of the container based on the temperature of the outer surface of the container determined by the temperature sensor by controlling the amount of infrared light emitted by the at least one light emitting diode.

Thus, by controlling the temperature of the outer surface of the container based on the temperature of the outer surface of the container determined by the temperature sensor, the dental material can be heated to a predetermined temperature in which the dental material has the desired properties. Thus, the properties of the dental material, for instance its viscosity, can be controlled more accurately during the heating process so that the dental material can be more accurately prepared for its intended use, such as filling cavities in a patient's tooth.

Furthermore, the dental material is heated more efficiently since overheating, which causes a waste of heating energy, can be avoided. Moreover, underheating the material can often lead to the dental material being unusable, which requires a further heating process in order to achieve the necessary temperature of the dental material. Thus, by avoiding underheating of the dental material reheating processes of the dental material can also be avoided and thus the total heating energy consumed to heat the dental material can also be reduced.

The amount of infrared light emitted by the at least one light emitting diode can be controlled by adjusting the current provided to the light emitting diode in order to adjust the intensity of the infrared light emitted by the light emitting diode. The current can be adjusted to predetermined set values based on the temperature of the outer surface of the container determined by the temperature sensor, for instance by means of the controller comparing the determined temperature with a predetermined current value, provided for instance by a lookup table. However, the current can also be adjusted in a stepless manner, for instance by means of a predetermined algorithm which calculates the current based on the temperature determined by the temperature sensor.

Alternatively or additionally, the amount of infrared light emitted by the at least one light emitting diode can be controlled by deactivating and/or activating the light emitting diode, preferably intermittently.

Preferably, the heating device can be configured as a portable table top device. Preferably, the opening extends into the body by a length of less than 20 cm, preferably less than 16 cm, more preferably less than 14 cm, more preferably less than 10 cm.

Preferably, the temperature sensor can be an infrared temperature sensor configured to detect infrared energy emitted by the container housing the dental material once received in the opening of the body. Preferably, the infrared temperature sensor can be a pyroelectric sensor or a thermopile detector or a bolometer focal plane array (FPA).

In an embodiment, the heating device can further comprise an adapter with a length L being at least partially received within the opening of the body along its length L. The adapter can preferably have a wall defining a receptacle configured to removably receive the container housing the dental material to be heated. Preferably, the at least one light emitting diode can be arranged outside of the adapter and along its length L. The adapter can be, at least in sections, at least partially transmissive for infrared light along the length L.

The adapter can comprise openings defined in its wall to allow the infrared light emitted by the light emitting diode to pass through the openings in order to allow a more direct, and thus efficient, heating of the dental material. The openings can be covered by a material which preferably is at least partially transmissive for infrared light.

Additionally or alternatively, the material of the adapter can be configured to be at least partially transmissive for infrared light, preferably in a wavelength range of the emitted infrared light of 800 to 1500 nm. Alternatively or additionally, the adapter can be made of different materials, wherein the materials can preferably be arranged in different portions of the adapter. Thus, a first material having a higher transmissivity for infrared light can be arranged in a first section or sections and a second material having a lower transmissivity for infrared light can be arranged in a second section or sections. Preferably, the material having a higher transmissivity for infrared light can be arranged proximal to the light emitting diodes or the plurality of light emitting diodes in order to allow a higher transmissivity for infrared light at least in the sections proximal to the light emitting diodes and thus a more efficient heating of the dental material.

The adapter can be substantially cylindrical. Moreover, the adapter can comprise two ends, of which at least one end preferably comprises an opening to allow receiving of the container housing the dental material. However, both ends of the adapter can also comprise an opening.

The adapter can be of a one-piece construction, wherein the adapter is a single integral part. However, the adapter can also be comprised of a plurality of pieces, for instance two half-shells, which can be assembled and disassembled in order to facilitate cleaning and/or disinfecting of the adapter.

The adapter can preferably be made of a material which is easy to clean and disinfect, for instance by using clinical disinfectants, such as isopropyl alcohol. For instance, the adapter can be made of polycarbonate. Preferably, the adapter can be manufactured by a low-cost and time-efficient manufacturing process, such as injection molding. Thus, the adapter can be manufactured cost-efficiently as a low-cost part and can thus also be a single-use or at least a low-use part so that the adapter can be disposed of after each use or after a plurality of uses in order to aid in providing a hygienic environment in and around the heating device. To enable an even improved disinfection the adapter can be made of a material which is autoclavable. Autoclavable means that the adapter can be sterilized using e.g. pressurized water steam (having a temperature of e.g. 110 to 150°C or 120 to 140°C). Suitable materials include plastic materials such as polypropylene, polycarbonate, and metal materials such as stainless steel.

By arranging the at least one light emitting diode outside of the adapter and along its length L, the light emitting diode is prevented from being contaminated by any undesired substance (for example residual dental material, bacteria and/or dirt) that may adhere on the container housing the dental material.

In an embodiment, the heating device can preferably comprise a second adapter being at least partially received within the opening of the body or within a second opening of the body along its length L. The second adapter can have a wall defining a receptacle configured to removably receive the container housing the dental material to be heated.

Alternatively, the second adapter can have a wall defining a receptacle configured to removably receive a second type of container housing the dental material to be heated. The second type of container can preferably be a syringe.

The heating device can thus be configured to heat more than one container, and preferably more than one type of container and/or more than one type of dental material, simultaneously or sequentially. This also increases the efficiency of the heating of the dental material. The heating device can comprise two separate light emitting diodes or two separate sets of light emitting diodes, each configured to heat one of the containers. However, the heating device can comprise one emitting diode or one set of light emitting diodes in order to heat both containers.

The heating device can also comprise more than two openings and thus more than two adapters, for instance 3, 4, 5 or 6 openings and adapters, in order to receive and heat a number of containers housing dental material. In this case, the heating device can comprise a plurality of separate light emitting diodes or a plurality of sets of light emitting diodes, each configured to heat one of the containers.

Preferably, the controller can be configured to control the amount of infrared light emitted by the at least one light emitting diode by intermittently interrupting and reactivating the emission of infrared light by the at least one light emitting diode.

Alternatively or additionally, the controller can be configured to control the amount of infrared light emitted by adjusting the intensity of the infrared light emitted by the at least one light emitting diode. Adjusting the intensity of the infrared light emitted by the at least one light emitting diode can preferably be performed by controlling a current provided to the at least one light emitting diode.

Preferably, the controller can be configured to limit the temperature of the dental material to 70 °C or less, preferably 65 °C or less.

Thus, in the case of temperature-sensitive dental materials, which deteriorate and/or are compromised and/or attain undesirable or at least less desirable properties or in the case of containers housing the dental material which deteriorate and/or are compromised at temperatures above 70 °C or 65 °C respectively, the heating process can be interrupted or the heating intensity can at least be reduced in order to prevent said deterioration and/or compromising and/or undesirable or at least less desirable properties of the dental material from occurring or at least minimize these effects.

Preferably, the controller can be configured to maintain the temperature of the dental material between 60 °C and 70 °C, preferably between 62 °C and 68 °C.

Thus, the dental material can be heated to and maintained within a predetermined temperature of between 60 °C and 70 °C, preferably between 62 °C and 68 °C, in which the dental material has properties which are desired and/or particularly advantageous for the intended purpose, such as filling a cavity in a patient's tooth and/or repairing crown damage. This allows for a more targeted, reliable and effective heating of the dental material with respect to its intended purpose.

In an embodiment the heating device can comprise a plurality of temperature sensors distributed circumferentially around the container housing the dental material once received in the opening of the body.

Thus, the plurality of temperature sensors can detect temperatures in different sections of the container. A more precise determination of the temperature of the outer surface of the container can thus be achieved. Furthermore, in case the container is not heating evenly, sections of the container heated to a higher temperature than others sections can be detected. Thus, compromising and/or deterioration of the container and/or the dental material can more accurately be prevented.

In an embodiment, the heating device can further include at least one optics configured and positioned to focus the infrared light emitted by the at least one light emitting diode onto the outer surface of the container housing the dental material once received in the opening of the body.

By focusing the infrared light emitted by the at least one light emitting diode onto the outer surface of the container, the dental material is heated more efficiently by intensifying the infrared light received on the container. Thus, the dental material can be heated more quickly and/or while providing less energy to the light emitting diode and/or by providing fewer light emitting diodes. Furthermore, by focusing the infrared light onto the outer surface of the container, the amount of infrared light emitted by the light emitting diode which does not reach the outer surface of the container, for instance due to diffusion, is reduced, thereby reducing the amount of wasted light emission of the light emitting diode. Thus, the energy consumption required to heat the dental material is reduced.

The heating device can preferably be a battery operated device. Thus, by reducing the energy consumption of the heating device from the battery, the battery life and the runtime of the device with the same battery or batteries can be extended.

The optics can preferably comprise at least one lens. Preferably, the optics can include multiple lenses arranged in sequence with respect to the optical path of the infrared light, preferably each having a different refractive index and/or dispersion value and/or thickness and/or diameter. However, the multiple lenses can also have the same refractive index and/or dispersion value and/or thickness and/or diameter.

The optics can preferably be oriented such that the optics focuses the infrared light emitted by the light emitting diode along a light path which intersects the longitudinal axis of the container once the container is at least partially received in the opening. This way, the dental material can be heated more directly and evenly.

Preferably, the at least one optics can be integrally formed on the adapter such that the at least one optics and the adapter constitute a one-piece component made of the same material.

Thus, the one optics and the adapter can be manufactured in a single process. The adapter and the optics can preferably be made of the same material, preferably polycarbonate. Preferably, a diffusion additive can be added to the polycarbonate, at least in the portion of the optics, to enhance the properties of the optics, for instance to mitigate glare.

Integrally forming the at least one optics on the adapter can eliminate the need to assemble the optics on the adapter or in a different portion of the heating device, thereby reducing the manufacturing time and/or the manufacturing costs of the adapter and the optics.

However, the at least one optics can also be releasably attached to the adapter. Preferably, the adapter and the at least one optics can be removable from the heating device as an integral component.

Thus, the optics and the adapter can be manufactured separately and can then be assembled such that the optics is attachable to the adapter. The adapter and the optics can thus also be dissembled, for instance in order to use a different adapter, having for instance a different size and/or shape, with the optics. Thus, for instance, the adapter can be discarded after one or multiple uses and the optics can be reused with another adapter.

This also allows greater flexibility in the choice of the optics used since the optics and the adapter can be manufactured using different manufacturing processes and/or different materials. Thus, for instance, lenses having various refraction indices and/or dispersion values and/or diameters and/or thicknesses can be manufactured. Thus, the configuration of the lens can be tailored more accurately to the desired and/or required effects for heating the container. For instance, a total internal reflection (TIR) optics can be used. The TIR optics can comprise a refractive lens arranged inside a reflector. TIR lenses can capture and redirect more light emitted from a light emitting diode than a conventional optic.

In an embodiment, the at least one optics and the at least one light emitting diode can constitute an integral component being removable from the heating device as such.

The at least one optics and the at least one light emitting diode can thus be pre-assembled to each other as an integral component prior to arranging them in the heating device. Thus, the light emitting diode and/or the optics can comprise an attaching means configured such that the light emitting diode and the optics can fixedly be attached to each other. This facilitates the assembly and/or disassembly and/or the replacement of the optics and/or the light emitting diode in the heating device.

Preferably, the heating device can comprise a plurality of light emitting diodes distributed circumferentially around the container housing the dental material once received in the opening.

Thus, the container can be heated more evenly by distributing a plurality of light emitting diodes circumferentially around the container. This can further reduce the heating time of the dental material and/or can reduce the amount of heating energy required to heat the dental material.

In an embodiment, the heating device can comprise a plurality of optics and a plurality of light emitting diodes distributed circumferentially around the container housing the dental material once received in the opening of the body.

In an embodiment, the adapter can be made from a material which is at least partially transmissive for infrared light, preferably for infrared light having a wavelength from 500 nm to 2000 nm, more preferably from 800 to 1,500 nm. Preferably, the adapter can be made of polycarbonate. Alternatively, the adapter can be made of any of the following materials: silicone, polyethylene terephthalate glycol-modified (PETG) and cyclic olefin polymer.

The heating device can preferably be configured to heat the dental material to a temperature of at least 65 °C within a heating time of 15 seconds or less, preferably 12 seconds or less, more preferably 10 seconds or less.

Thus, by heating the dental material to a temperature of at least 65 °C within the above-mentioned times, the heating time can be significantly reduced in comparison with known heating devices and/or heating processes. Thus, the time required to prepare the dental material for the application of the dental material on the patient's tooth or teeth can be reduced, thereby shortening waiting and/or treatment times.

Described is also a further heating device for heating a dental material.

The heating device comprises a body having an opening formed therein configured to at least partially receive a container housing the dental material to be heated.

The body of the heating device can include a housing configured to house the components of the heating device, such as electronics, batteries, control elements etc. The housing can be of a one-piece construction or a multi-piece construction, such as a two-piece construction, for instance to facilitate assembly of the heating device.

The opening formed in the body can be open to the environment surrounding the heating device. However, the opening can also be at least selectively and at least partially closed to the environment, for instance by means of a lid or other closing structure in order to prevent or at least minimize contamination within the opening when the heating device is not in use. The opening can extend into the body by a certain distance, such as by a length of 15 cm.

The opening can be configured to receive different types of containers, such as capsules and/or syringes. Thus, the shape and/or geometry of the opening formed in the body can in particular be configured to accommodate the container housing the dental material to be at least partially received in the opening. Thus, for instance, the length of the opening can be configured according to the length of the container to be at least partially received.

The body can also include an internal threading arranged at or in the opening and configured to engage with an external threading, provided for instance on an external applicator carrying the container and/or on the container itself.

Additionally or alternatively, the body can include at least one locking element configured to lock the container and/or the applicator in position. For instance, the body can include a slot configured to receive a protrusion arranged on the container and/or on the applicator. Alternatively or additionally, the body can include a detent configured to cooperate with a slot or groove arranged on the container and/or the applicator. However, the detent can also be arranged on the container and/or the applicator and the slot or groove can be arranged on the body, for instance in the opening.

Thus, providing said locking element can prevent unwanted removal of the container from the opening. For instance, the heating device can be configured to prevent removal of the container from the opening until a pre-determined temperature and/or a predetermined heating time of the dental material is achieved. Once the pre-determined temperature and/or the predetermined heating time of the dental material is achieved, the heating device can actuate the locking element, for instance by means of an actuator and a controller, in order to allow the container to be withdrawn from the opening by the user.

The heating device can also comprise a detection means configured to detect the presence of the container in the opening of the body, for instance in the form of a contact switch or non-contact switch, such as a proximity sensor, a photoelectric barrier or a temperature sensor. The detection means can also be configured to communicate with a controller configured to control the heating device. Thus, when the container is removed from the opening of the heating device, the heating device can detect the removal of the container and can be deactivated or switched to a standby mode in which the heating elements are deactivated by means of the detection means and the controller. Thus, the safety of the heating device can be enhanced by preventing unwanted heating by the heating device.

The heating device can also comprise a detection means, which can be the same detection means as described above or a different detection means, configured to deactivate the heating device or switch the heating device to a standby mode in which the heating elements are deactivated after the detection means has detected that the container has been in the opening for a predetermined time. Thus, the safety of the heating device is enhanced by preventing prolonged and unwanted heating by the heating device. Furthermore, deterioration and/or compromising of the dental material and/or the container can be prevented.

The body can also comprise a plurality of openings formed therein, each configured to at least partially receive a container housing the dental material to be heated. At least two of the openings can each have different geometries and/or shapes, for instance in order to accommodate different containers of different sizes and/or different shapes and/or housing different dental materials with respect to their composition and/or physical properties.

For instance, one opening can be configured to receive a syringe housing the dental material and a second opening can be configured to receive a capsule housing the dental material. The at least two different containers can be configured to house different dental materials, preferably having different properties. For instance, one dental material housed in a first container might have to be heated to a first temperature and a second dental material in a second container might have to be heated to a second temperature which is different from the first temperature.

The dental material to be heated can be any dental material used to restore a patient's teeth, in particular for filling cavities and for repairing crown fractures, tooth wear and congenital defects. The dental material is a curable material since the dental material is often cured, for instance by applying light to the dental material after the material has been applied to the patient's teeth. In particular, the dental material can include resin-based composite materials comprising a matrix and at least one filler, such as filler glasses and glass ceramics. Furthermore, the dental materials can also include glass ionomer cement, for instance.

The heating device further comprises at least one light emitting diode configured to emit infrared light onto an outer surface of the container housing the dental material once received in the opening.

The light emitting diode can be configured to emit light having a wavelength in the range of 800 to 1,500 nm. Preferably the light emitting diode can be configured to emit light having a wavelength of substantially 950 nm. The light emitting diode can preferably be arranged within the body of the heating device, preferably within close proximity of an outer surface, such as an outer wall, of the container once said container is at least partially received in the opening. Preferably, the light emitting diode can be positioned to be within 5 cm, preferably within 4 cm, more preferably within 3 cm, more preferably within 2 cm, most preferably within 1 cm of the outer surface of the container once said container is at least partially received in the opening.

The heating device can also include proximity sensors configured to detect the proximity of the outer surface of the container once said container is at least partially received in the opening. Thus, the proximity sensor can be configured to communicate with a controller and an actuator configured to displace the light emitting diode. Thus, the proximity sensor can ensure that the light emitting diode is not damaged by the container when placing the container into the opening. Also, the proximity sensor and the actuator can ensure a close proximity of the light emitting to the outer surface of the container in order to increase the efficiency of the heating of the dental material. Different containers, preferably having different shapes and/or different sizes, can thereby be placed into the opening while maintaining a close proximity of the light emitting diode to the outer surface of the container.

Preferably, the heating device can comprise a plurality of light emitting diodes, wherein the plurality of light emitting diodes are preferably distributed around the circumference of the container and/or along a longitudinal axis of the container once the container is at least partially received in the opening.

The heating device also comprises at least one optics configured and positioned to focus the infrared light emitted by the at least one light emitting diode onto the container housing the dental material once received in the opening of the body.

By focusing the infrared light emitted by the at least one light emitting diode onto the outer surface of the container housing the dental material is heated more efficiently by intensifying the infrared light onto the container. Thus, the dental material can be heated quicker and/or while providing less energy to the light emitting diode. Furthermore, by focusing the infrared light onto the outer surface of the container, the amount of infrared light emitted by the light emitting diode which does not reach the outer surface of the container, for instance due to diffusion, is reduced, thereby reducing the amount of wasted light emission of the light emitting diode. Thus, the energy consumption required to heat the dental material is reduced.

The heating device can preferably be a battery operated device. Thus, by reduce the energy consumption of the heating device from the battery, the battery life and the runtime of the device with the same battery or batteries can be extended.

The optics can preferably comprise at least one lens. Preferably, the optics can include multiple lenses arranged in sequence with respect to the optical path of the infrared light, preferably each having a different refractive index and/or dispersion value and/or thickness and/or diameter. However, the multiple lenses can also have the same refractive index and/or dispersion value and/or thickness and/or diameter.

The optics can preferably be oriented such that the optics focuses the infrared light emitted by the light emitting diode along a light path which intersects the longitudinal axis of the container once the container is at least partially received in the opening. This way, the dental material is heated more evenly.

Preferably, the heating device can be configured as a portable table top device. Preferably, the opening extends into the body by a length of less than 20 cm, preferably less than 16 cm, more preferably less than 14 cm, more preferably less than 10 cm.

In an embodiment, the heating device can further comprise an adapter with a length L being at least partially received within the opening of the body along its length L. The adapter can preferably have a wall defining a receptacle configured to removably receive the container housing the dental material to be heated. Preferably, the at least one light emitting diode can be arranged outside of the adapter and along its length L. The adapter can be, at least in sections, at least partially transmissive for infrared light along the length L.

The adapter can comprise openings defined in its wall to allow the infrared light emitted by the light emitting diode to pass through the openings in order to allow a more direct, and thus efficient, heating of the dental material. The openings can be covered by a material which preferably is at least partially transmissive for infrared light.

Additionally or alternatively, the material of the adapter can be configured to be at least partially transmissive for infrared light, preferably in a wavelength range of the emitted infrared light of 800 to 1500 nm. Alternatively or additionally, the adapter can be made of different material, wherein the materials can preferably be arranged in different portions of the adapter. Thus, a first material having a higher transmissivity for infrared light can be arranged in a first section or sections and a second material having a lower transmissivity for infrared light can be arranged in a second section or sections. Preferably, the material having a higher transmissivity for infrared light can be arranged proximal to the light emitting diodes or the plurality of light emitting diodes in order to allow a more efficient heating of the dental material.

The adapter can be substantially cylindrical. Moreover, the adapter can comprise 2 ends, of which at least end preferably comprises an opening to allow receiving of the container housing the dental material. However, both ends of the adapter can also comprise an opening.

The adapter can be of a one-piece construction, wherein the adapter is a single integral part. However, the adapter can also be comprised of a plurality of pieces, for instance two half-shells, which can be assembled and disassembled in order to facilitate cleaning and/or disinfecting of the adapter.

The adapter can preferably be made of a material which is easy to clean and disinfect, for instance by using clinical disinfectants, such as isopropyl alcohol. For instance, the adapter can be of polycarbonate. Preferably, the adapter can be manufactured by a low-cost and time-efficient manufacturing process, such as injection molding. Thus, the adapter can be manufactured cost-efficiently as a low-cost part and can thus also be a single-use or at least low-use part so that the adapter can be disposed of after each use or after a plurality of uses in order to aid in providing a hygienic environment in and around the heating device.

By arranging the at least one light emitting diode outside of the adapter and along its length L, the light emitting diode is prevented from getting contaminated from any undesired substance (for example residual dental material, bacteria and/or dirt) that may adhere on the container housing the dental material.

In an embodiment, the heating device can preferably comprise a second adapter being at least partially received within the opening of the body or within a second opening of the body along its length L. The second adapter can have a wall defining a receptacle configured to removably receive the container housing the dental material to be heated.

Alternatively, the second adapter can have a wall defining a receptacle configured to removably receive a second type of container housing the dental material to be heated. The second type of container is preferably a syringe.

The heating device can thus be configured to heat more than one container, and preferably more than one type of container, simultaneously or sequentially. This also increases the efficiency of the heating of the dental material. The heating device can comprise two separate light emitting diodes or two separate sets of light emitting diodes, each configured to heat one of the containers. However, the heating device can comprise one emitting diode or one set of light emitting diodes in order to heat both containers.

The heating device can also comprise more than two openings and thus more than two adapters, for instance 3, 4, 5 or 6 openings and adapters, in order to receive and heat a number of containers housing dental material. In this case, the heating device can comprise a plurality of separate light emitting diodes or a plurality of sets of light emitting diodes, each configured to heat one of the containers.

Preferably, the at least one optics can be integrally formed on the adapter such that the at least one optics and the adapter constitute a one-piece component made of the same material.
Thus, the one optics and the adapter can be manufactured in a single process. The adapter and the optics can preferably be made of the same material, preferably polycarbonate. Preferably, a diffusion additive can be added to the polycarbonate, at least in the portion of the optics to enhance the properties of the optics, for instance to mitigate glare.

Integrally forming the at least one optics on the adapter can eliminate the need to assemble the optics on the adapter or in a different portion of the heating device, thereby reducing the manufacturing time and/or the manufacturing costs of the adapter and the optics.

However, the at least one optics can also be releasably attached to the adapter. Preferably, the adapter and the at least one optics can be being removable from the heating device as an integral component. Thus, the optics and the adapter can be manufactured separately and can then be assembled such that the optics is attachable to the adapter. The adapter and the optics can thus also be dissembled, for instance in order to use a different adapter, having for instance a different size and/or shape, with the optics. Thus, for instance, the adapter can be discarded after one or multiple uses and the optics can be reused with another adapter.

This also allows greater flexibility in the choice of the optics used since the optics and the adapter can be manufactured using different manufacturing processes and/or different materials. Thus, for instance, more sophisticated lenses can be selected, in order for instance to select from lenses having different refraction indices and/or dispersion values and/or diameters and/or thicknesses. Thus, the configuration of the lens can be tailored more accurately to the desired and/or required effects for heating the container. For instance, a total internal reflection (TIR) optics can be used. The TIR optics can comprise a refractive lens arranged inside a reflector. TIR optics can capture and redirect more light emitted from a light emitting diode than a conventional optics.

In an embodiment, the at least one optics and the at least one light emitting diode can constitute an integral component being removable from the heating device as such.

The at least one optics and the at least one light emitting diode can thus be pre-assembled to each other as an integral component prior to arranging them in the heating device. Thus, the light emitting diode and/or the optics can comprise an attaching means configured such that the light emitting diode and the optics can fixedly be attached to each other. This facilitates the assembly and/or disassembly and/or the replacement of the optics and/or the light emitting diode of the heating device.

Preferably, the heating device can comprise a plurality of light emitting diodes distributed circumferentially around the container housing the dental material once received in the opening.

Thus, the container can be heated more evenly by distributing a plurality of light emitting diodes circumferentially around the container. This can further quicken the heating process of the dental material and/or can reduce the amount of heating energy required to heat the dental material.

In an embodiment, the heating device can comprise a plurality of optics and a plurality of light emitting diodes distributed circumferentially around the container housing the dental material once received in the opening of the body.

In an embodiment, the heating device comprises at least one infrared temperature sensor configured to detect infrared energy emitted by the container housing the dental material once received in the opening of the body and to determine a temperature of the outer surface of the container.

The temperature sensor can preferably be a contactless temperature sensor which does not have to contact the outer surface of the container in order to determine temperature of the outer surface of the container, such as an infrared temperature sensor, for instance a pyroelectric sensor or a thermopile detector or a bolometer focal plane array (FPA), configured to detect infrared energy emitted by the container housing the dental material once received in the opening of the body. However, the temperature sensor can also be configured to contact the outer surface of the container in order to determine the temperature of the outer surface of the container, such as a thermocouple or a resistance thermometer, such as a PT100. In this case, the heating device can also comprise a displacing means for displacing the temperature sensor towards or away from the container once the container is at least partially received in the opening to ensure the temperature sensor contacts the outer surface of the container.

In both cases described above, the heating device can also comprise a proximity sensor to detect the distance between the temperature sensor and the outer surface of the container once the container is at least partially received in the opening.

Moreover, the heating device can comprise a plurality of temperature sensors. At least two temperature sensors can each be of different types, wherein for instance a first temperature sensor is a contactless temperature sensor, such as an infrared temperature sensor, and a second temperature sensor is a contact temperature sensor, such as a thermocouple or a resistance thermometer.

By determining the temperature of the outer surface of the container by means of the temperature sensors or the plurality of temperature sensors an underheating and/or an overheating of the dental material can be determined and be prevented, for instance by deactivating the heating process of the heating device once a predetermined temperature measured by the temperature sensor has been reached. Thus, a deterioration and/or a compromising of the dental material and/or of the container housing the dental material can be prevented or at least reduced.

The heating device also comprises a controller having a control circuitry configured to communicate with the temperature sensor and the at least one light emitting diode and to control the temperature of the outer surface of the container based on the temperature of the outer surface of the container determined by the temperature sensor by controlling the amount of infrared light emitted by the at least one light emitting diode.

Thus, by controlling the temperature of the outer surface of the container based on the temperature of the outer surface of the container determined by the temperature sensor, the dental material can be heated to a predetermined temperature in which the dental material has the desired properties. Thus, the properties of the dental material, for instance its viscosity, can be controlled more accurately during the heating process so that the dental material can be more accurately prepared for its intended use, such as filling cavities in a patient's tooth.

Furthermore, the dental material is heated more efficiently since overheating, which causes a waste of heating energy, can be avoided. Moreover, underheating the material can often lead to the dental material being unusable, which requires a further heating process in order to achieve the necessary temperature of the dental material. Thus, by avoiding underheating of the dental material the reheating of the dental material can also be avoided and thus the total heating energy consumed to heat the dental material can also be reduced.

The amount of infrared light emitted by the at least one light emitting diode can be controlled by adjusting the current providing to the light emitting diode in order to adjust the intensity of the infrared light emitted by the light emitting diode. The current can be adjusted to predetermined values based on the temperature of the outer surface of the container determined by the temperature sensor, for instance by means of the controller comparing the determined temperature with a predetermined current value, provided for instance by a lookup table. However, the current can also be adjusted in a stepless manner, for instance by means of a predetermined algorithm which calculates the current based on the temperature determined by the temperature sensor.

Alternatively or additionally, the amount of infrared light emitted by the at least one light emitting diode can be controlled by deactivating and/or activating the light emitting diode, preferably intermittently.

In an embodiment, the heating device can comprise a plurality of infrared temperature sensors distributed circumferentially around the container housing the dental material once received in the opening of the body.

Thus, the plurality of temperature sensors can detect temperatures in different sections of the container. A more precise determination of the temperature of outer surface of the container can thus be achieved. Furthermore, in case the container is not heating evenly, sections of the container heated to a higher temperature than other sections can be detected. Thus, compromising and/or deterioration of the container and/or the dental material can more accurately be prevented.

Preferably, the adapter can be made from a material which is at least partially transmissive for infrared light, preferably for infrared light having a wavelength from 500 nm to 2,000 nm, more preferably from 800 to 1,500 nm.

Alternatively or additionally, the adapter can be made of different materials, wherein the materials can preferably be arranged in different portions of the adapter. Thus, a first material having a higher transmissivity for infrared light can be arranged in a first section or sections and a second material having a lower transmissivity for infrared light can be arranged in a second section or sections. Preferably, the material having a higher transmissivity for infrared light can be arranged proximal to the light emitting diodes or the plurality of light emitting diodes in order to allow a more efficient heating of the dental material.

The object as set out in the beginning is also solved by a system for applying dental material, comprising the heating device as set out in the claims and further comprising a container housing a dental material.

The container can preferably include a chamber for housing the dental material. The container can also comprise a dispensing nozzle connected to the chamber for dispensing the dental material. Furthermore, the container can comprise a piston arranged in the chamber for urging the dental material toward the dispensing nozzle.

In an embodiment, the system can further comprise a dispensing gun configured to releasably receive the container. The dispensing gun can also be configured to advance the piston of the container. Moreover, the dispensing gun can also be configured to be inserted into the opening of the body with at least a portion thereof such that the container housing the dental material is received at least partially in the opening of the body.

It is also an object of the invention to provide a method which allows heating a dental material with improved heating efficiency.

This object is achieved by a method for controlling the temperature of a dental material as set out in the claims. The advantages and features described in relation to the heating devices disclosed herein apply accordingly to the method described below.

The method includes the steps:
a) heating a dental material housed in a container by means of least one light emitting diode emitting infrared light onto an outer surface of the container housing the dental material;
b) determining the temperature of an outer surface of the container housing the dental material by means of at least one temperature sensor;
c) comparing the determined temperature with a target temperature of the heated dental material; and
d) adjusting the amount of infrared light emitted by the at least one light emitting diode based on the comparison of the determined temperature with the target temperature.

In an embodiment, the temperature of the outer surface of the container housing the dental material can be detected by detecting infrared energy emitted by the container by means of at least one infrared temperature sensor.

Preferably, the target temperature of the heated dental material can be based on a predetermined target viscosity of the heated dental material. The target temperature of the dental material is typically within a range of 40 to 70 °C or 50 to 65 °C.

In an embodiment, the outer surface of the container housing the dental material can be heated to a predetermined temperature which is above the target temperature of the heated dental material for at least a portion of the total heating time.

Thus, the dental material can be heated to its target temperature, which is preferably substantially 68 °C, as quickly as possible. Since the dental material is housed in the container, the container itself is heated while the dental material is heated or even prior to the temperature of the dental material rising due to the emitted infrared light. Thus, due to the material of the container housing the dental material having a certain heat capacity, the container presents a thermal mass which absorbs heat, which is then transferred to the dental material. Thus, the time required to heat the dental material to a desired and/or predetermined temperature is extended due to the thermal mass of the container.

By heating the outer surface of the container housing the dental material to a predetermined temperature which is above the target temperature of the heated dental material for at least a portion of the total heating time, the container can be pre-heated to the predetermined temperature faster so that the heat absorbed by the container can be quickly dissipated into the dental material in order to shorten the heating time of the dental material.

Once the pre-determined temperature is reached, the target temperature of the device can be set to the target temperature of the dental material. This target temperature can then be maintained for a certain, preferably predetermined, time.

Thus, the container can be temporarily overheated, thus reducing the overall heating time until the target temperature of the dental material is reached, without overheating the dental material.

The predetermined temperature to which the outer surface of the container housing the dental material can be heated can preferably be dependent on the material of the container, preferably depending on the heat capacity of the material of the container, and/or the thickness of the walls of the container.

The predetermined temperature which is above the target temperature of the heated dental material can preferably be lower than the maximum service temperature of the container. Preferably, the predetermined temperature to which the container can be preheated can be less than 165 °C, in particular for a container made of polybutylene terephthalate (PBT), preferably less than 110 °C, in particular for a container made of polypropylene (PP). However, this temperature limit depends on the material used. Thus, if a container of a different material than mentioned above is used, the predetermined temperature to which the container can be preheated can be higher or lower than the temperature limits mentioned.

The predetermined preheating temperature of the outer surface of the container and the target temperature of the dental material can be controlled, for instance, by means of a proportional-integral-derivative (PID) controller.

In an embodiment, the amount of infrared light emitted by the at least one light emitting diode can be adjusted by intermittently interrupting and reactivating the emission of infrared light by the at least one light emitting diode or by adjusting a current provided to the at least one light emitting diode.

Preferably, steps c) and d) can be performed at predetermined intervals. Thus, the user can predetermine at which time intervals steps c) and d) are performed. Alternatively or additionally, the manufacturer of the heating device can predetermine the intervals from the factory.

Preferably, steps c) and d) can be performed at variable intervals. The interval can preferably be varied based on the previously determined temperature of the outer surface of the container.

Thus, a controller can determine, for instance based on a predetermined algorithm or lookup table, how much time should lapse in between consecutive executions of steps c) and d) based on the previously determined temperature of the outer surface of the container.

Thus, for instance, if a higher temperature was previously determined then the time interval can be set higher than if a lower temperature was previously determined.

Preferably, steps c) and d) can be performed continuously by means of pulse width modulation.

Preferably, the temperature of the dental material can be limited to 70 °C or less, preferably 65 °C or less.

Preferably, the temperature of the dental material can be maintained between 60 °C and 70 °C, preferably between 62 °C and 68 °C.

Preferably, the temperature of the dental material can be heated to at least 65 °C within a heating time of 15 seconds or less, preferably 12 seconds or less, more preferably 10 seconds or less.

Preferred embodiments of the present invention are further elucidated below with reference to the figures.
Fig. 1 shows a perspective view of an embodiment according to the invention;
Fig. 2 shows a perspective view of a further embodiment according to the invention;
Fig. 3 shows a further perspective view of the embodiment shown in Fig. 2;
Fig. 4 shows a perspective view of a further embodiment according to the invention; and
Fig. 5 shows a perspective view of a further embodiment according to the invention.

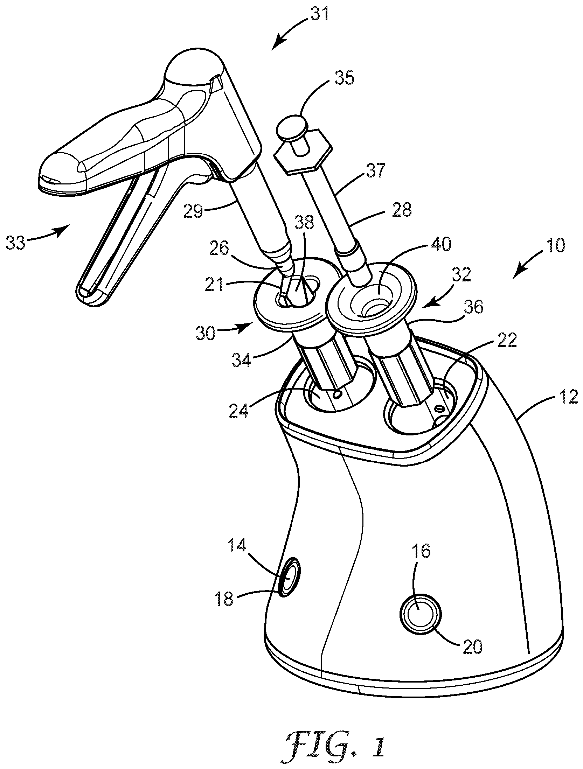

Fig. 1 shows a perspective view of a heating device 10 for heating a dental material, wherein the heating device 10 is preferably configured as a portable table top device. The heating device 10 is preferably a battery operated device. Thus, the heating device 10 can be easily moved to different locations within a treatment environment and can be arranged close to the point of application of the dental material.

The heating device 10 comprises a body 12. The body 12 is constructed as a multi-piece part and includes two control buttons 14, 16 configured to control the heating device 10. The control buttons 14, 16 can be configured to switch the heating device 10 into a standby-mode without activating the heating process of the heating device 12.

The control buttons 14, 16 can further be configured to activate a heating process of the heating device 10. Furthermore, the control buttons 14, 16 can be configured such that by actuating one of the buttons 14, 16, for instance by touching or pressing one of the buttons 14, 16, for a period shorter than a predetermined threshold value the heating device can be switched into the standby-mode. The control buttons 14, 16 can further be configured such that by actuating one of the buttons 14, 16 for a period longer than a predetermined threshold the heating process of the heating device 10 can be activated.

Furthermore, the buttons 14, 16 can be configured such that the duration during which one of the buttons 14, 16 is actuated can determine the mode and/or duration of the heating process of the heating device 10. Alternatively or additionally, the amount of sequential actuations of one of the buttons 14, 16 can determine the mode and/or duration of the heating process of the heating device 10. Different modes of the heating device 10 can comprise, for instance, at least one of different heating temperature profiles, different target temperature of the dental material and different heating intensities.

The body 12 further includes indicating lights 18, 20 arranged in a circular shape around the buttons 14, 16 which can indicate the mode the heating device is in, i.e. in standby-mode, heating mode, etc. The indicating lights 18, 20 can also indicate warnings to the user, such as a defect of the heating device 10 and/or when the dental material should be removed from the heating device 10, for instance when the target heating time and/or the target temperature of the dental material has been reached.

The body 12 further includes two openings 22, 24 each formed in the body 12. Both openings 22, 24 are configured to at least partially receive a container 26, 28 housing the dental material to be heated.

Thus, the control button 14 is configured to control the heating process in the opening 24 and the control button 16 is configured to control the heating process in the opening 22. However, the body 12 can also comprise a single button to control the heating process in both openings 22, 24.

As shown in Fig. 1, the container 26 to be received by the opening 24 is a capsule housing dental material to be applied in a patient's mouth, for instance for filling a cavity in a patient's tooth. The container 28 to be received by the opening 22 is a syringe also housing a dental material to be applied in a patient's mouth, such as for repairing crown damage.

The capsule 26 comprises a dispensing nozzle 21 for dispensing the dental material from the capsule 26, wherein the capsule 26 is releasably attached to a mouth piece 29 of a dispensing gun 31. The dispensing gun 31 is configured to dispense the dental material from the capsule 26 by applying a force to an actuating handle 33 by the user.

The syringe 28, on the other hand, comprises a piston 35 configured to dispense the dental material from the syringe 28 by axially displacing the piston 35 relative to a housing 37 of the syringe 28.

Thus, the openings 22, 24 can be configured to receive different types of containers 26, 28, such as different sizes and/or different shapes, as shown in Fig.1. However, the openings 22, 24 can be substantially the same size and shape and can be configured to receive the same type of container. The body 12 can also comprise more than two openings, for instance 3, 4, 5, 6, 7, 8 or more, in order to heat a number of dental materials either at the same time or sequentially.

The heating device 10 further comprises two adapters 30, 32 each having a wall 34, 36 defining a receptacle 38, 40 configured to receive one of the containers 26, 28 housing the dental material. The receptacles 38, 40 are each sized and shaped to receive the corresponding containers 26, 28. The adapters 30, 32, which are shown in a retracted position with regard to the openings 22, 24, are to be at least partially received in the openings 22, 24.

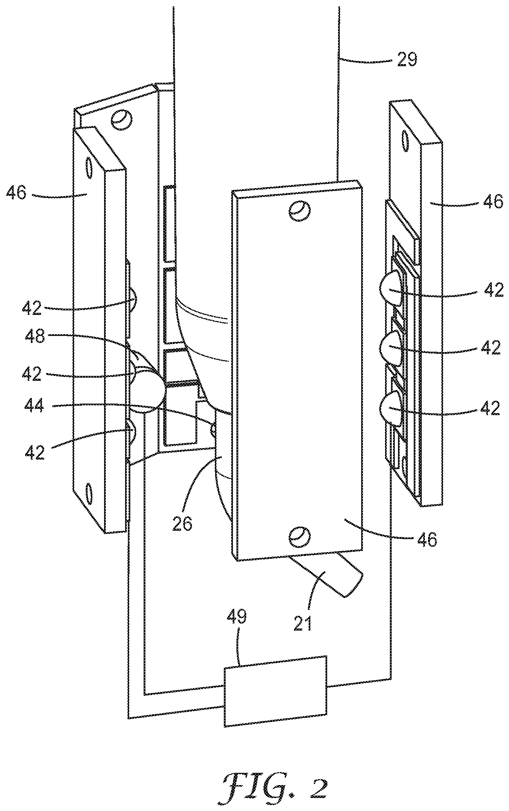

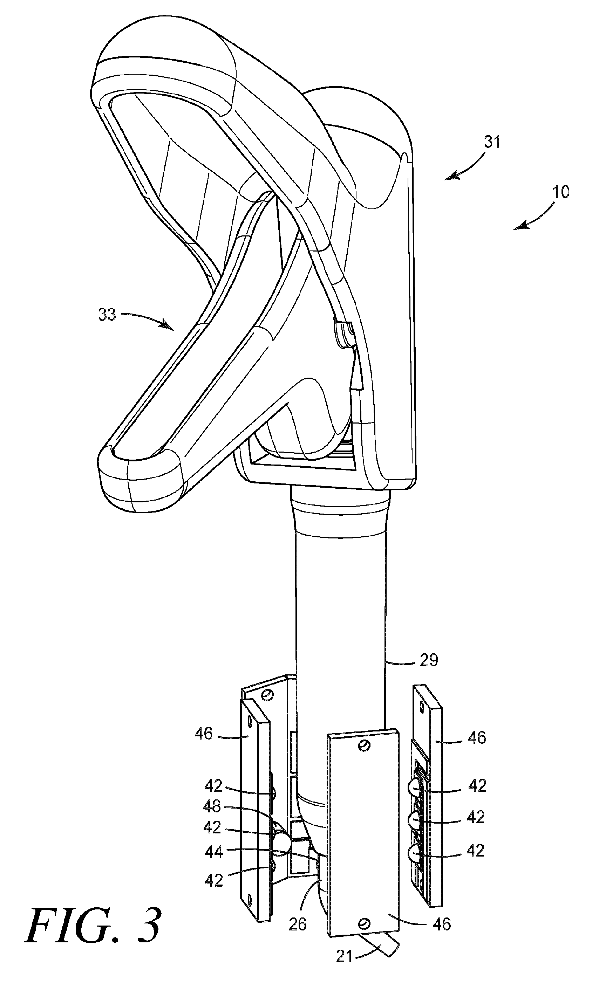

Fig. 2 shows the container 26 received in the opening 24 of the body 12. As can further be seen in Fig. 2, the heating device 10 further comprises light emitting diodes 42 configured to emit infrared light onto an outer surface 44 of the container 26. The light emitting diodes 42 are mounted on mounting structures 46 configured to be attached within the body 12. Furthermore, the mounting structures 46 and the light emitting diodes 42 are distributed circumferentially around the container 26 in order to evenly heat the dental material housed in the container 26.

The heating device 10 further comprises a temperature sensor 48 configured to determine a temperature of the outer surface 44 of the container 26 received in the opening 24 of the body 12. In the embodiment shown in Fig. 2, the temperature sensor 48 is an infrared temperature sensor configured to detect infrared energy emitted by the container 26. However, the temperature sensor 48 can alternatively be configured to contact the outer surface 44 of the container 26 in order to determine the temperature of the outer surface 48 of the container 26, such as a thermocouple or a resistance thermometer, such as a PT100.

The heating device 10 can also comprise a plurality of temperature sensors 48, preferably distributed circumferentially around the container 26. Preferably, the opening 22 configured to receive the syringe 28 also comprises a temperature sensor 48 such as the one shown in Fig. 2. However, the temperature sensor 48 arranged in the opening 22 can be of a different type than the temperature sensor 48 arranged in the opening 24 as shown in Fig. 2, such as a temperature sensor configured to contact the outer surface 44 of the container 26 in order to determine the temperature of the outer surface 48 of the container 26, such as a thermocouple or a resistance thermometer, such as a PT100.

The heating device 10 further comprises a controller 49 having a control circuitry configured to communicate with the temperature sensor 48 and the light emitting diodes 42 to control the temperature of the outer surface 44 of the container 26 based on the temperature of the outer surface 44 of the container 26 determined by the temperature sensor 48 by controlling the amount of infrared light emitted by the light emitting diodes 42.

The controller 49 can be configured to control the amount of infrared light emitted by the light emitting diodes 42 by intermittently interrupting and reactivating the emission of infrared light by the light emitting diodes 42.

Alternatively or additionally, the controller 49 can be configured to control the amount of infrared light emitted by adjusting the intensity of the infrared light emitted by the light emitting diodes 42. Adjusting the intensity of the infrared light emitted by the light emitting diodes 42 can preferably be performed by controlling a current provided to the light emitting diodes 42.

Preferably, the adapter 30 is also arranged in the opening 24, wherein the light emitting diodes 42 are preferably arranged outside of the adapter 30. Thus, the adapter 30 is preferably at least partially transmissive for infrared light, at least in sections. For clarity purposes, the adapter 30 is not shown in Fig. 2.

Fig. 3 substantially shows the arrangement shown in Fig. 2. Fig. 3 further shows the dispensing gun 31 with the container 26 received by the mouth piece 29, as shown in Fig. 1. For clarity purposes, the controller 49 has been omitted in Fig. 3.

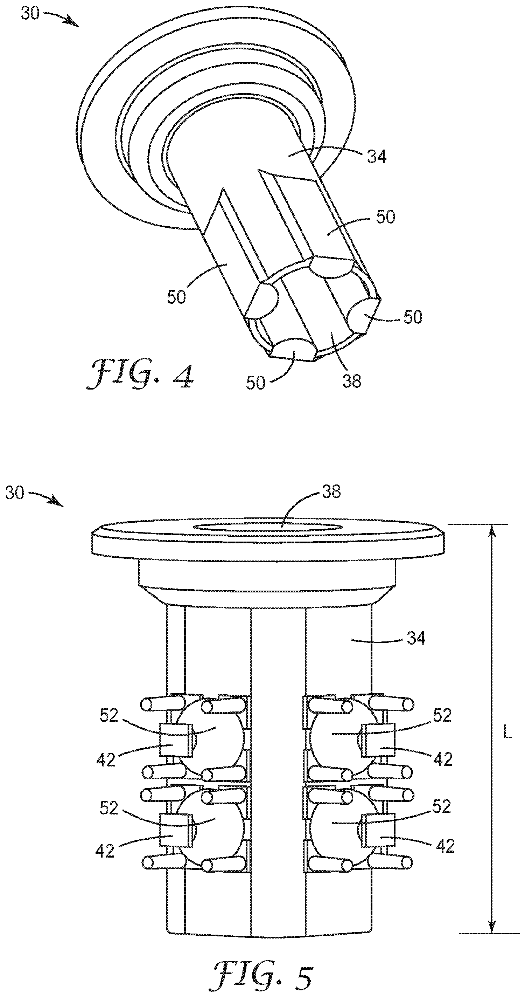

Fig. 4 shows the adapter 30 as shown in Fig. 1. The adapter 30 is open on both ends of the receptacle 38 formed by the wall 34. The adapter 30 comprises four optics 50 configured and positioned to focus the infrared light emitted by the light emitting diodes 42 onto the outer surface 44 of the container 26 housing the dental material once received in the opening 24 of the body 12.

The optics 50 are integrally formed on the adapter 30 such that the optics 50 and the adapter 30 constitute a one-piece component made of the same material. Preferably, the adapter 30 is made of polycarbonate. Thus, in this case, the optics 50 can also be made of polycarbonate.

By focusing the infrared light emitted by the light emitting diodes 42 onto the outer surface 44 of the container 26, the dental material is heated more efficiently by intensifying the infrared light onto the container 26.

The adapter 32 received in the opening 22, as shown in Fig. 1, can have the same configuration as the adapter 30 shown in Fig. 4.

Fig. 5 shows an alternative embodiment, in which the adapter comprises optics 52 mounted to the light emitting diodes 42. Each optics 52 and its corresponding light emitting diode 42 constitute an integral component releasably attached to the adapter 30. The optics 52 can, for instance, include a total internal reflection (TIR) optics.

The adapter 32 received in the opening 22, as shown in Fig. 1, can have the same configuration as the adapter 30 shown in Fig. 5.

## Claims

1. A heating device (10) for heating a curable dental material, the heating device (10) comprising:
a body (12) having an opening (22, 24) formed therein configured to at least partially receive a container (26, 28) housing the curable dental material to be heated,
at least one light emitting diode (42) configured to emit infrared light having a wavelength in the range of 500nm - 2000nm, preferably in the range of 800nm - 1500nm, onto an outer surface (44) of the container (26, 28) housing the curable dental material once received in the opening (22, 24),
at least one temperature sensor (48) configured to determine a temperature of the outer surface (44) of the container (26, 28) once received in the opening (22, 24) of the body (12), and
a controller (49) having a control circuitry configured to communicate with the temperature sensor (48) and the at least one light emitting diode (42) and to control the temperature of the outer surface (44) of the container (26, 28) based on the temperature of the outer surface (44) of the container (26, 28) determined by the temperature sensor (48) by controlling the amount of infrared light emitted by the at least one light emitting diode (42)
wherein the temperature sensor (48) is either a contactless temperature sensor configured to detect infrared energy emitted by the container, or a contact temperature sensor configured to contact the outer surface of the container in order to determine the temperature of the outer surface of the container.

2. The heating device (10) according to the preceding claim further comprising at least one or at least two adapters (30, 32) with a length L being at least partially received within the opening (22, 24) of the body (12) along its length L and having a wall (34, 36) defining a receptacle (38, 40) configured to removably receive the container (26, 28) housing the curable dental material to be heated, wherein the at least one light emitting diode (42) is arranged outside of the adapter (30, 32) and along its length L and wherein the adapter (30, 32) is, at least in sections, at least partially transmissive for infrared light along the length L.

3. The heating device (10) according to any of the preceding claims, wherein the controller (49) is configured to control the amount of infrared light emitted by the at least one light emitting diode (42) by intermittently interrupting and reactivating the emission of infrared light or by controlling a current provided to the at least one light emitting diode (42).

4. The heating device (10) according to any of the preceding claims, further including at least one optics (50, 52) configured and positioned to focus the infrared light emitted by the at least one light emitting diode (42) onto the outer surface (44) of the container (26, 28) housing the curable dental material once received in the opening (22, 24) of the body (12).

5. The heating device (10) according to claim 4, wherein the at least one optics (50) is integrally formed on the adapter (30, 32) such that the at least one optics (50) and the adapter (30, 32) constitute a one-piece component made of the same material.

6. The heating device (10) according to claim 1, wherein the heating device (10) is configured as a portable table top device, and wherein preferably the opening (22, 24) extends into the body (12) by a length of less than 20 cm, preferably less than 16 cm, more preferably less than 14 cm, more preferably less than 10 cm.

7. A system for applying a curable dental material, comprising the heating device (10) of any of the preceding claims and a container (26, 28) housing a curable dental material.

8. The system according to claim 7, wherein the container (26, 28) includes a chamber for housing the curable dental material, a dispensing nozzle (21) connected to the chamber for dispensing the dental material and a piston arranged in the chamber for urging the curable dental material toward the dispensing nozzle (21).

9. A method for controlling the temperature of a curable dental material, including the steps:
a) heating a curable dental material housed in a container (26, 28) by means of least one light emitting diode (42) emitting infrared light onto an outer surface (44) of the container (26, 28) housing the curable dental material using the system according to any of claims 7 or 8;
b) determining the temperature of an outer surface (44) of the container (26, 28) housing the curable dental material by means of at least one temperature sensor (48);
c) comparing the determined temperature with a target temperature of the heated curable dental material; and
d) adjusting the amount of infrared light emitted by the at least one light emitting diode (42) based on the comparison of the determined temperature with the target temperature.

10. The method according to claim 9, wherein the temperature of the outer surface (44) of the container (26, 28) housing the curable dental material is detected by detecting infrared energy emitted by the container (26, 28) by means of at least one infrared temperature sensor (48).

11. The method according to claim 9 or 10, wherein the target temperature of the heated curable dental material is based on a predetermined target viscosity of the heated curable dental material.

12. The method according to any of claims 9 to 11, wherein the outer surface (44) of the container (26, 28) housing the curable dental material is heated to a predetermined temperature which is above the target temperature of the heated curable dental material for at least a portion of the total heating time.

13. The method according to any of claims 9 to 12, wherein the amount of infrared light emitted by the at least one light emitting diode (42) is adjusted by intermittently interrupting and reactivating the emission of infrared light by the at least one light emitting diode (42) or by adjusting a current provided to the at least one light emitting diode (42).

## Patentansprüche

1. Eine Heizvorrichtung (10) zum Erhitzen eines aushärtbaren Dentalmaterials, die Heizvorrichtung (10) aufweisend:
einen Körper (12), der eine darin ausgebildete Öffnung (22, 24) hat, die konfiguriert ist, um mindestens teilweise einen Behälter (26, 28) aufzunehmen, der das zu erhitzende, aushärtbare Dentalmaterial enthält,
mindestens eine Leuchtdiode (42), die konfiguriert ist, um Infrarotlicht, das eine Wellenlänge in dem Bereich von 500 nm - 2000 nm, vorzugsweise im Bereich von 800 nm - 1500 nm hat, auf eine Außenoberfläche (44) des Behälters (26, 28) auszusenden, der das aushärtbare Dentalmaterial enthält, sobald es in der Öffnung (22, 24) aufgenommen ist,
mindestens einen Temperatursensor (48), der konfiguriert ist, um eine Temperatur der Außenoberfläche (44) des Behälters (26, 28) zu bestimmen, sobald er in der Öffnung (22, 24) des Körpers (12) aufgenommen ist, und
eine Steuerung (49), die eine Steuerschaltung hat, die konfiguriert ist, um mit dem Temperatursensor (48) und der mindestens einen Leuchtdiode (42) zu kommunizieren und um die Temperatur der Außenoberfläche (44) des Behälters (26, 28) basierend auf der durch den Temperatursensor (48) bestimmten Temperatur der Außenoberfläche (44) des Behälters (26, 28) durch Steuern der durch die mindestens eine Leuchtdiode (42) ausgesendeten Infrarotlichtmenge zu steuern,
wobei der Temperatursensor (48) entweder ein kontaktloser Temperatursensor, der konfiguriert ist, um durch den Behälter ausgesendete Infrarotenergie zu erfassen, oder ein Kontakttemperatursensor ist, der konfiguriert ist, um die Außenoberfläche des Behälters zu kontaktieren, um die Temperatur der Außenoberfläche des Behälters zu bestimmen.

2. Die Heizvorrichtung (10) nach dem vorstehenden Anspruch, ferner aufweisend mindestens einen oder mindestens zwei Adapter (30, 32) mit einer Länge L, die mindestens teilweise entlang ihrer Länge L innerhalb der Öffnung (22, 24) des Körpers (12) aufgenommen sind und eine Wand (34, 36) haben, die eine Aufnahme (38, 40) definiert, die konfiguriert ist, um den Behälter (26, 28), der das zu erhitzende aushärtbare Dentalmaterial enthält, entnehmbar aufzunehmen, wobei die mindestens eine Leuchtdiode (42) außerhalb des Adapters (30, 32) und entlang seiner Länge L angeordnet ist und wobei der Adapter (30, 32) entlang der Länge L mindestens abschnittsweise mindestens teilweise für Infrarotlicht durchlässig ist.

3. Die Heizvorrichtung (10) nach einem der vorstehenden Ansprüche, wobei die Steuerung (49) konfiguriert ist, um die durch die mindestens eine Leuchtdiode (42) ausgesendete Infrarotlichtmenge zu steuern, durch intermittierendes Unterbrechen und wieder Aktivieren der Emission von Infrarotlicht oder durch Steuern eines Stroms, der der mindestens einen Leuchtdiode (42) bereitgestellt wird.

4. Die Heizvorrichtung (10) nach einem der vorstehenden Ansprüche, die ferner mindestens eine Optik (50, 52) einschließt, die konfiguriert und positioniert ist, um das durch die mindestens eine Leuchtdiode (42) ausgesendete Infrarotlicht auf die Außenoberfläche (44) des Behälters (26, 28) zu fokussieren, der das aushärtbare Dentalmaterial enthält, sobald es in der Öffnung (22, 24) des Körpers (12) aufgenommen ist.

5. Die Heizvorrichtung (10) nach Anspruch 4, wobei die mindestens eine Optik (50) an dem Adapter (30, 32) derart integral ausgebildet ist, dass die mindestens eine Optik (50) und der Adapter (30, 32) ein einstückiges Bauteil, das aus dem gleichen Material hergestellt ist, darstellen.

6. Die Heizvorrichtung (10) nach Anspruch 1, wobei die Heizvorrichtung (10) als eine tragbare Tischplattenvorrichtung konfiguriert ist, und wobei sich die Öffnung (22, 24) vorzugsweise um eine Länge von weniger als 20 cm, vorzugsweise weniger als 16 cm, mehr bevorzugt weniger als 14 cm, mehr bevorzugt weniger als 10 cm in den Körper (12) hinein erstreckt.

7. Ein System zum Auftragen eines aushärtbaren Dentalmaterials, aufweisend die Heizvorrichtung (10) nach einem der vorstehenden Ansprüche und einen Behälter (26, 28), der ein aushärtbares Dentalmaterial enthält.

8. Das System nach Anspruch 7, wobei der Behälter (26, 28) eine Kammer zum Enthalten des aushärtbaren Dentalmaterials, eine mit der Kammer verbundene Abgabedüse (21) zum Abgeben des Dentalmaterials und einen in der Kammer angeordneten Kolben zum Drücken des aushärtbaren Dentalmaterials in Richtung der Abgabedüse (21) einschließt.

9. Ein Verfahren zum Steuern der Temperatur eines aushärtbaren Dentalmaterials, das die Schritte einschließt:
a) Erhitzen eines aushärtbaren Dentalmaterials, das in einem Behälter (26, 28) enthalten ist, mittels mindestens einer Leuchtdiode (42), die Infrarotlicht auf eine Außenoberfläche (44) des Behälters (26, 28) aussendet, der das aushärtbare Dentalmaterial enthält, unter Verwendung des Systems nach einem der Ansprüche 7 oder 8;
b) Bestimmen der Temperatur einer Außenoberfläche (44) des Behälters (26, 28), der das aushärtbare Dentalmaterial enthält, mittels mindestens eines Temperatursensors (48);
c) Vergleichen der bestimmten Temperatur mit einer Zieltemperatur des erhitzten aushärtbaren Dentalmaterials; und
d) Anpassen der durch die mindestens eine Leuchtdiode (42) ausgesendeten Infrarotlichtmenge basierend auf dem Vergleich der bestimmten Temperatur mit der Zieltemperatur.

10. Das Verfahren nach Anspruch 9, wobei die Temperatur der Außenoberfläche (44) des Behälters (26, 28), der das aushärtbare Dentalmaterial enthält, durch Erfassen der durch den Behälter (26, 28) ausgesendeten Infrarotenergie mittels mindestens eines Infrarottemperatursensors (48) erfasst wird.

11. Das Verfahren nach Anspruch 9 oder 10, wobei die Zieltemperatur des erhitzten, aushärtbaren Dentalmaterials auf einer vorbestimmten Zielviskosität des erhitzten, aushärtbaren Dentalmaterials basiert.

12. Das Verfahren nach einem der Ansprüche 9 bis 11, wobei die Außenoberfläche (44) des Behälters (26, 28), der das aushärtbare Dentalmaterial enthält, für mindestens einen Teil der gesamten Heizzeit auf eine vorbestimmte Temperatur erhitzt wird, die über der Zieltemperatur des erhitzten aushärtbaren Dentalmaterials liegt.

13. Das Verfahren nach einem der Ansprüche 9 bis 12, wobei die durch die mindestens eine Leuchtdiode (42) ausgesendete Infrarotlichtmenge durch intermittierendes Unterbrechen und wieder Aktivieren der Emission von Infrarotlicht durch die mindestens eine Leuchtdiode (42) oder durch Anpassen eines Stroms, der der mindestens einen Leuchtdiode (42) bereitgestellt wird, angepasst wird.

## Revendications

1. Dispositif de chauffage (10) permettant de chauffer un matériau dentaire durcissable, le dispositif de chauffage (10) comprenant :
un corps (12) ayant une ouverture (22, 24) formée à l'intérieur de celui-ci conçue pour recevoir au moins partiellement un contenant (26, 28) logeant un matériau dentaire durcissable à chauffer,
au moins une diode électroluminescente (42) configurée pour émettre de la lumière infrarouge ayant une longueur d'onde dans la plage de 500 nm à 2000 nm, de préférence dans la plage de 800 nm à 1500 nm, sur une surface externe (44) du contenant (26, 28) logeant le matériau dentaire durcissable une fois reçu dans l'ouverture (22, 24),
au moins un capteur de température (48) configuré pour déterminer une température de la surface externe (44) du contenant (26, 28) une fois reçu dans l'ouverture (22, 24) du corps (12), et
un organe de commande (49) ayant un système de circuits de commande configuré pour communiquer avec le capteur de température (48) et l'au moins une diode électroluminescente (42) et pour commander la température de la surface externe (44) du contenant (26, 28) en fonction de la température de la surface externe (44) du contenant (26, 28) déterminée par le capteur de température (48) en commandant la quantité de lumière infrarouge émise par l'au moins une diode électroluminescente (42)
dans lequel le capteur de température (48) est soit un capteur de température sans contact configuré pour détecter de l'énergie infrarouge émise par le contenant, soit un capteur de température à contact conçu pour venir en contact avec la surface externe du contenant afin de déterminer la température de la surface externe du contenant.

2. Dispositif de chauffage (10) selon la revendication précédente comprenant en outre au moins un ou au moins deux adaptateurs (30, 32) avec une longueur L étant au moins partiellement reçus au sein de l'ouverture (22, 24) du corps (12) le long de sa longueur L et ayant une paroi (34, 36) définissant un réceptacle (38, 40) conçu pour recevoir de manière amovible le contenant (26, 28) logeant le matériau dentaire durcissable à chauffer, dans lequel l'au moins une diode électroluminescente (42) est agencée à l'extérieur de l'adaptateur (30, 32) et le long de sa longueur L et dans lequel l'adaptateur (30, 32) est, au moins dans des sections, au moins partiellement transmissif pour de la lumière infrarouge le long de la longueur L.

3. Dispositif de chauffage (10) selon l'une quelconque des revendications précédentes, dans lequel l'organe de commande (49) est configuré pour commander la quantité de lumière infrarouge émise par l'au moins une diode électroluminescente (42) en interrompant et en réactivant de façon intermittente l'émission de lumière infrarouge ou en commandant un courant fourni à l'au moins une diode électroluminescente (42).

4. Dispositif de chauffage (10) selon l'une quelconque des revendications précédentes, comportant en outre au moins une optique (50, 52) configurée et positionnée pour focaliser la lumière infrarouge émise par l'au moins une diode électroluminescente (42) sur la surface externe (44) du contenant (26, 28) logeant le matériau dentaire durcissable une fois reçu dans l'ouverture (22, 24) du corps (12).

5. Dispositif de chauffage (10) selon la revendication 4, dans lequel l'au moins une optique (50) est formée d'un seul tenant sur l'adaptateur (30, 32) de telle sorte que l'au moins une optique (50) et l'adaptateur (30, 32) constituent un composant monobloc fabriqué dans le même matériau.

6. Dispositif de chauffage (10) selon la revendication 1, dans lequel le dispositif de chauffage (10) est conçu en tant que dispositif portable de table, et dans lequel de préférence l'ouverture (22, 24) s'étend dans le corps (12) sur une longueur inférieure à 20 cm, de préférence inférieure à 16 cm, plus préférablement inférieure à 14 cm, plus préférablement inférieure à 10 cm.

7. Système permettant d'appliquer un matériau dentaire durcissable, comprenant le dispositif de chauffage (10) selon l'une quelconque des revendications précédentes et un contenant (26, 28) logeant un matériau dentaire durcissable.

8. Système selon la revendication 7, dans lequel le contenant (26, 28) comporte une chambre permettant de loger le matériau dentaire durcissable, une buse de distribution (21) raccordée à la chambre permettant de distribuer le matériau dentaire et un piston agencé dans la chambre permettant de presser le matériau dentaire durcissable en direction de la buse de distribution (21).

9. Procédé permettant de commander la température d'un matériau dentaire durcissable, comportant les étapes :
a) chauffage d'un matériau dentaire durcissable logé dans un contenant (26, 28) au moyen d'au moins une diode électroluminescente (42) émettant de la lumière infrarouge sur une surface externe (44) du contenant (26, 28) logeant le matériau dentaire durcissable à l'aide du système selon l'une quelconque des revendications 7 ou 8 ;
b) détermination de la température d'une surface externe (44) du contenant (26, 28) logeant le matériau dentaire durcissable au moyen d'au moins un capteur de température (48) ;
c) comparaison de la température déterminée à une température cible du matériau dentaire durcissable chauffé ; et
d) ajustement de la quantité de lumière infrarouge émise par l'au moins une diode électroluminescente (42) en fonction de la comparaison de la température déterminée à la température cible.

10. Procédé selon la revendication 9, dans lequel la température de la surface externe (44) du contenant (26, 28) logeant le matériau dentaire durcissable est détectée en détectant de l'énergie infrarouge émise par le contenant (26, 28) au moyen d'au moins un capteur de température à infrarouge (48).

11. Procédé selon la revendication 9 ou 10, dans lequel la température cible du matériau dentaire durcissable chauffé est en fonction d'une viscosité cible prédéterminée du matériau dentaire durcissable chauffé.

12. Procédé selon l'une quelconque des revendications 9 à 11, dans lequel la surface externe (44) du contenant (26, 28) logeant le matériau dentaire durcissable est chauffée à une température prédéterminée qui est au-dessus de la température cible du matériau dentaire durcissable chauffé pendant au moins une partie du temps de chauffage total.

13. Procédé selon l'une quelconque des revendications 9 à 12, dans lequel la quantité de lumière infrarouge émise par l'au moins une diode électroluminescente (42) est ajustée en interrompant et en réactivant de façon intermittente l'émission de lumière infrarouge par l'au moins une diode électroluminescente (42) ou en ajustant un courant fourni à l'au moins une diode électroluminescente (42).
